# EUROPEAN PATENT APPLICATION

(11) **EP 4 531 175 A1**
(43) Date of publication of application: **02.04.2025**
(21) Application number: 24185461.1
(22) Date of filing: 28.06.2024
(51) Int. Cl.: H01M 50/176, H01M 50/528, H01M 50/533, H01M 50/548, H01M 50/553, H01M 50/566, H01M 50/536, H01M 50/55

(54) **SECONDARY BATTERY**

(30) Priority: 26.09.2023 KR 20230128755
(71) Applicant: Samsung SDI Co., Ltd., Yongin-si, Gyeonggi-do 17084 (KR)
(72) Inventor: Kim, Tae Jun, 17084 Yongin-si, Gyeonggi-do (KR); Yoo, Jae Hyun, 17084 Yongin-si, Gyeonggi-do (KR); Lee, Choong Hoon, 17084 Yongin-si, Gyeonggi-do (KR); Ahn, Gi Jang, 17084 Yongin-si, Gyeonggi-do (KR)
(74) Representative: Gulde & Partner

(57) **Abstract**

A secondary battery includes: an electrode assembly including a first electrode plate, a second electrode plate, and a separator; a case accommodating the electrode assembly and having an opening; a cap plate coupled to and sealing the opening in the case; a first terminal plate on the cap plate and electrically connected to the first electrode plate; and a first current collector plate between the first terminal plate and the electrode assembly to electrically connect the first terminal plate to the first electrode plate. The first current collector plate has a first protrusion that passes through the cap plate and is connected to the first terminal plate.

## Description

### BACKGROUND

### 1. Field

Aspects of embodiments of the present disclosure relate to a secondary battery.

### 2. Description of the Related Art

Secondary batteries are designed to be rechargeable unlike primary batteries. From among the various secondary batteries, a low-capacity battery including a battery cell (e.g., a single battery cell) in the form of a pack may be used in small, portable electronic devices, such as smartphones and digital cameras, and a high-capacity battery module including tens to hundreds of battery packs connected to each other may be used as a power source for, e.g., driving motors of hybrid vehicles or electric vehicles, and the like.

A rechargeable secondary battery generally includes an electrode assembly, in which a separator is interposed between a positive electrode plate and a negative electrode plate, a current collector plate electrically connected to the electrode assembly, a terminal electrically connected to the current collector plate, a case accommodating the electrode assembly and the current collector plate, and a cap plate sealing (or blocking) the case and through which the terminal passes to be coupled to an external device.

A terminal plate and the current collector plate may be fixed through rivets. For example, the terminal plate and the current collector plate may be fixed by using the rivets, and then, upper and lower portions of the rivets may be welded. In some embodiments, in addition, a subplate connected to the electrode assembly may be fixed to the current collector plate by welding. That is, the welding has to be performed on each of the rivet portions and the subplate. As the number of welding points increases, more components are required, and thus, a defect rate increases, thereby increasing production cost and reducing productivity.

The above-described information disclosed in the Background section acts as the background of the present disclosure and is for improving understanding of the background of the present disclosure. Thus, it may include information that does not constitute the related (or prior) art.

### SUMMARY

The invention is defined by the appended claims. The description that follows is subjected to this limitation. Any disclosure lying outside the scope of said claims is only intended for illustrative as well as comparative purposes. Aspects of embodiments of the present disclosure provide a secondary battery in which a current collector plate and a subplate are integrated with each other and a current collector plate and a terminal plate are welded to each other to reduce costs and improve productivity.

However, aspects and features of the present disclosure are not limited to those described above, and other aspects and features not mentioned can be clearly understood by those skilled in the art from the description of the present disclosure provided below.

According to an embodiment of the present invention, a secondary battery includes: an electrode assembly including a first electrode plate, a second electrode plate, and a separator; a case accommodating the electrode assembly and having an opening; a cap plate coupled to and sealing the opening in the case; a first terminal plate on the cap plate and electrically connected to the first electrode plate; and a first current collector plate between the first terminal plate and the electrode assembly to electrically connect the first terminal plate to the first electrode plate. The first current collector plate has a first protrusion that passes through the cap plate and is connected to the first terminal plate.

The first current collector plate may include: a first terminal connection part connected to the first terminal plate; and a first electrode connection part extending from the first terminal connection part and coupled to the first electrode plate.

The first terminal connection part and the first electrode connection part may be integral with each other.

The first protrusion may be at central area of the first terminal connection part, and may protrude toward the cap plate.

The first current collector plate may further include a first connection part that is vertically bent from the first terminal connection part toward the electrode assembly and extend to the first electrode connection part and is between the first terminal connection part between the first electrode connection part.

The first connection part may have inclined surface at portion extending from the first terminal connection part to the first electrode connection part.

In the first connection part, a thickness at a side of the first terminal connection part and a thickness at a side of the first electrode connection part may be different from each other.

A thickness of the first terminal connection part may be greater than that of the first electrode connection part.

The first protrusion may be in contact with bottom surface of the first terminal plate.

The first protrusion may be laser welded to bottom surface of the first terminal plate.

The first protrusion may protrude in an oval shape in a plan view.

The cap plate may have a first through-hole through which the first protrusion pass, and the first through-hole may correspond to shape of the first protrusion.

The first through-hole may have a size greater than or equal to that of the first protrusion.

A portion of the first electrode connection part in a longitudinal direction may be bent to protrude to the outside of the electrode assembly, and two areas of the first electrode connection part may be locate at both sides of the protruding portion bent towards the electrode assembly about the protruding portion.

The secondary battery may further include: a first sub tab coupled to the first electrode connection part and connected to the first electrode plate.

The first electrode connection part and the first sub tab may be laser welded from outer surface of the first electrode connection part.

A welding area, on which the first electrode connection part is laser welded, may be divided in the longitudinal direction.

The welding area, on which the laser welding is performed, may be at both sides of the protruding portion of the first electrode connection part.

When the electrode assembly is in a stacked shape, a laser welding direction may be perpendicular to an arrangement direction of the first electrode plate.

The secondary battery may further include a first upper insulating member between the first terminal connection part and the first terminal plate.

The secondary battery may further include a first lower insulating member between the first terminal connection part and the cap plate.

The secondary battery may further include: a second terminal plate on the cap plate and electrically connected to the second electrode plate, and a second current collector plate between the second terminal plate and the electrode assembly to electrically connect the second terminal plate to the second electrode plate, and the first current collector plate may have a thickness greater than or equal to that of the second current collector plate.

### BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, explain aspects and features of the present disclosure. In the drawings:
FIG. 1 is a perspective view of a secondary battery according to embodiments;
FIG. 2 is an exploded perspective view of the secondary battery shown in FIG. 1;
FIGS. 3A and 3B are perspective and front views, respectively, of a current collector plate of the secondary battery shown in FIG. 1 according to embodiments;
FIGS. 4A and 4B are a perspective view and a cross-sectional view taken along the line 4b-4b in FIG. 4A, respectively, of the current collector plate shown in FIGS. 3A and 3B and a terminal plate according to embodiments;
FIGS. 5A to 5C are a front view of a structure of a current collector plate according to various embodiments; and
FIG. 6 is a graph showing a temperature change for the different positions of the current collector plate shown in FIGS. 5A to 5C.

### DETAILED DESCRIPTION

Hereinafter, embodiments of the present disclosure will be described, in detail, with reference to the accompanying drawings. The terms used in this specification and claims are not limited to their dictionary meanings and are merely used to enable a clear and consistent understanding of embodiments of the present disclosure. Accordingly, it should be apparent to those skilled in the art that the following description of embodiments of the present disclosure is provided for illustration purpose and not for the purpose of limiting the present disclosure as defined by the appended claims and their equivalents. Thus, because the embodiments described in this specification and the configurations shown in the drawings are one embodiment of the present disclosure and do not represent all of the technical ideas of the present disclosure, it should be understood that there may be various equivalents and modifications that can be substituted for them at the time of this application.

That is to say, the present disclosures may be embodied in many different forms and should not be construed as being limited to the embodiments set forth herein; rather, these embodiments are provided so that this disclosure will be thorough and complete and will fully convey the scope of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

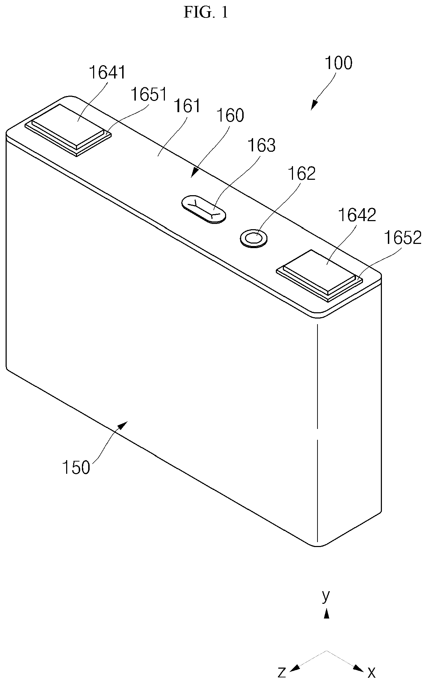

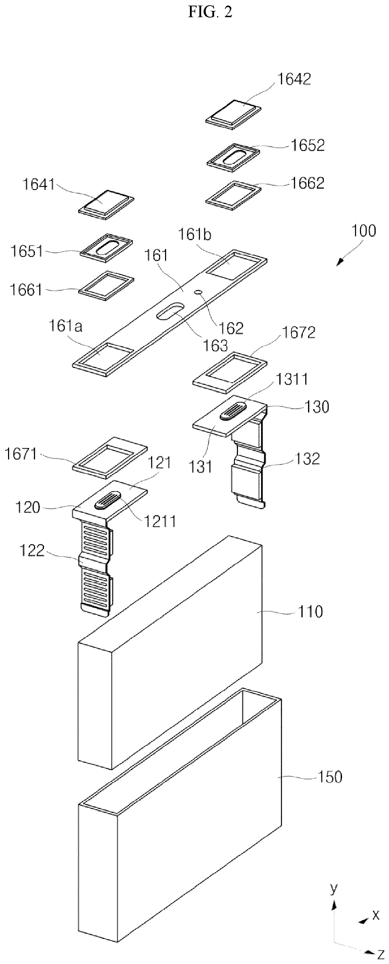

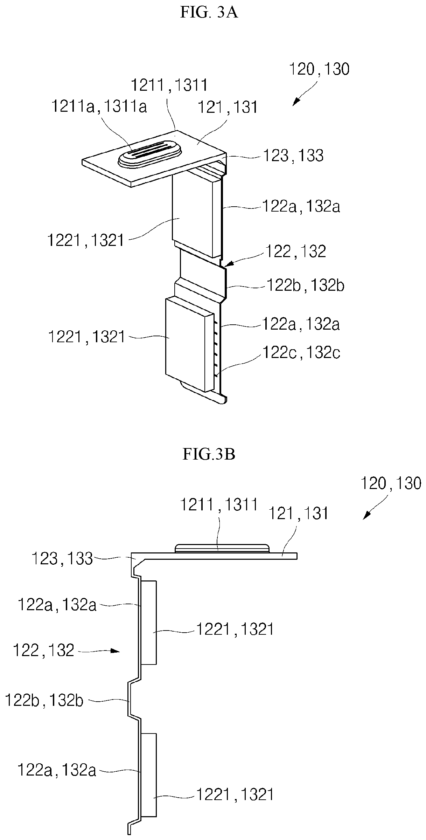

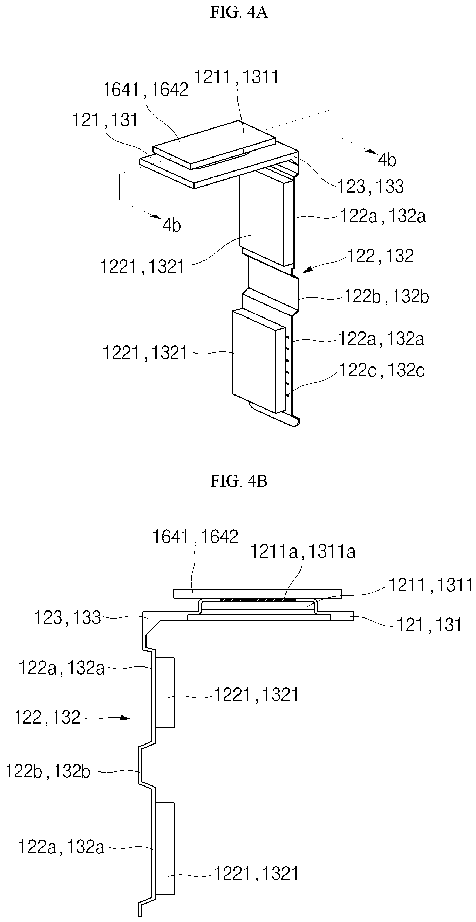

FIG. 1 is a perspective view of a secondary battery according to embodiments, FIG. 2 is an exploded perspective view of the secondary battery shown in FIG. 1, FIGS. 3A and 3B are perspective and front views, respectively, of a current collector plate of the secondary battery shown in FIG. 1 according to embodiments, and FIGS. 4A and 4B are a perspective view and a cross-sectional view taken along the line 4b-4b in FIG. 4A, respectively, of the current collector plate shown in FIGS. 3A and 3B and a terminal plate according to embodiments.

Referring to FIGS. 1 to 4B, a secondary battery 100, according to an embodiment of the present disclosure, includes an electrode assembly 110, current collector plates 120 and 130, a case 150, and a cap assembly 160.

The electrode assembly 110 may be provided by (or formed by) stacking a plurality of (e.g., a plurality of stacks of) a first electrode plate, a separator, and a second electrode plate, each of which has a thin plate or film shape. In some embodiments, the electrode assembly 110 may have a rectangular parallelepiped shape in which a rectangular first electrode plate, a rectangular separator, and a rectangular second electrode plate are sequentially stacked. In some embodiments, the electrode assembly 110 may have a rectangular parallelepiped shape in which a separator is attached to both side surfaces of the first electrode plate, the first electrode plate and the separator are folded together in an approximately "Z" or "S" shape, and the second electrode plate is fitted between both sides of a folding area having a zigzag shape to be stacked. In the stack type electrode assembly, when the electrode assembly 110 having the rectangular parallelepiped shape is coupled to (or accommodated in) the case 150 having an approximately rectangular parallelepiped opening, there is little to no empty space between the electrode assembly 110 and the case 150 so the battery may exhibit significantly increased capacity. In some embodiments, the first electrode plate may have a first polarity, for example, may act as a positive electrode, and the second electrode plate may have a second polarity, for example, may act as a negative electrode. In some embodiments, the first electrode plate and the second electrode plate may have different polarities (e.g., may be opposite polarities to those described above) depending on selection of a person skilled in the art.

The first electrode plate may include a first electrode current collector made of a metal foil, such as aluminum foil, and may have a first electrode coating portion, which is formed by applying a first electrode active material, such as a transition metal oxide, on the metal foil, and non-coating portion, which is not coated with the first electrode active material. The first electrode non-coating portion may provide a path for a current flow between the first electrode plate and the outside. In some embodiments, the first electrode non-coating portion may be disposed to overlap at the same position if the first electrode plate is stacked, thereby providing a multi-tap structure. The first electrode non-coating portion may protrude to (or may protrude from) one side of the electrode assembly 110. In some embodiments, a plurality of first electrode non-coating portions may be welded to each other to provide one first current collector tab. The first electrode non-coating portion may be aligned to one side of the electrode assembly 110 to protrude therefrom.

The second electrode plate may include a second electrode current collector made of a metal foil, such as copper, a copper alloy, nickel, or a nickel alloy, and may have a second electrode coating portion, which is formed by applying a second electrode active material, such as graphite or carbon, on the metal foil, and a second electrode non-coating portion, which is not coated with the second electrode active material. The second electrode non-coating portion may provide a path for a current flow between the second electrode plate and the outside. In some embodiments, the second electrode non-coating portion may also be disposed to overlap at the same position if the second electrode plate is stacked, thereby providing a multi-tap structure. The second electrode non-coating portion may be provided to protrude to the other side (e.g., the opposite side) of the electrode assembly 110. In some embodiments, a plurality of first electrode non-coating portions may be welded to each other to provide one second current collector tab.

The separator may be disposed between the first electrode plate and the second electrode plate to prevent a short circuit therebetween while enabling the movement of lithium ions therebetween. The separator may be made of polyethylene, polypropylene, or a composite film of polyethylene and polypropylene. The material of the separator is not limited, however. In some embodiments, the separator may be replaced with a solid electrolyte.

In some embodiments, after the plurality of electrode plates are stacked, the electrode assembly 110 may be maintained in the stacked state by a separate insulating tape attached to a partial area thereof. In some embodiments, the insulating tape may allow the electrode assembly 110 to be maintained in its shape so that the electrode assembly 110 is connected to the current collector plates 120 and 130 at the correct position and so that the structure of the electrode assembly 110 is maintained in a structure of the final secondary battery.

In some embodiments, the electrode assembly 110 and electrolyte may be substantially accommodated in the case 150. The electrolyte may include an organic solvent, such as ethylene carbonate (EC), propylene carbonate (PC), diethyl carbonate (DEC), ethyl methyl carbonate (EMC), or dimethyl carbonate (DMC), and a lithium salt, such as LiPF₆ or LiBF₄. In some embodiments, the electrolyte may be a liquid, a solid, or a gel.

The current collector plates 120 and 130 may include a first current collector plate 120 electrically connected to the first electrode non-coating portion and a second current collector plate 130 electrically connected to the second electrode non-coating portion. The first current collector plate 120 may be made of a conductive material, such as aluminum, and may be electrically coupled to the first electrode non-coating portion protruding from one end of the electrode assembly 110 to be electrically connected to the first electrode plate. The first current collector plate 120 may include a first terminal connection part 121 and a first electrode connection part 122. In some embodiments, the first terminal connection part 121 and the first electrode connection part 122 may be integrated with each other. In some embodiments, the first terminal connection part 121 and the first electrode connection part 122 may have a structure that is designed to enable sheet metal production and injection mold production after laser cutting. A more detailed description of the current collector plates 120 and 130 will be provided below.

The case 150 may have a hollow rectangular parallelepiped shape with at least one opening. For example, the case 150 may have an opening defined in an upper or side surface thereof. However, hereinafter, an embodiment in which the opening is defined in the upper portion of the case 150 is described with reference to FIG. 2. The electrode assembly 110 may be inserted into the case 150 through the opening. The case 150 may have a bottom part, a pair of long sides, and a pair of short sides connecting (or extending between) the pair of long sides to each other, and the opening may be provided opposite to the bottom part. A cap plate 161 may be coupled to the opening of the case 150 to seal the case 150. An inner surface of the case 150 may be insulated to prevent electrical short circuits from occurring therein. In some embodiments, one electrode of the electrode assembly 110 may be electrically connected to the case 150 through the cap plate 161. In some embodiments, an internal electrical short circuit may be prevented by insulating the inside of the case 150. In some embodiments, the case 150 may be made of a conductive metal, such as aluminum, an aluminum alloy, or nickel-plated steel, and may be manufactured by a deep drawing process or by a bending and welding process.

The cap assembly 160 may be coupled to the upper portion (e.g., the opening) of the case 150. The cap assembly 160 may include the cap plate 161, an electrolyte injection hole 162 in the cap plate 161, a safety vent 163, a first terminal plate 1641, a second terminal plate 1642, a first upper insulating member 1651, a second upper insulating member 1652, a first coupling plate 1661, a second coupling plate 1662, a first lower insulating member 1671, and a second lower insulating member 1672.

The cap plate 161 may seal the opening of the case 150 and may be made of the same material as that of the case 150. The cap plate 161 may be provided as a thin plate having a flat plate shape. In some embodiments, the cap plate 161 may be coupled to the case 150 through laser welding. In some embodiments, the cap plate 161 may be electrically independent (e.g., may be electrically floating) or, in some embodiments, may be electrically connected to either the first current collector plate 120 or the second current collector plate 130. In some embodiments, the cap plate 161 may have a first through-hole 161a and a second through-hole 161b, through which a first protrusion 1211 and a second protrusion 1311 of the first and second current collector plates 120 and 130, respectively, pass. The first through-hole 161a and second through-hole 161b may correspond to shapes of the first protrusion 1211 and the second protrusion 1311, respectively. In some embodiments, sizes of the first through-hole 161a and the second through-hole 161b may be greater than or equal to the size of the first protrusion 1211 and the second protrusion 1311. For example, the first protrusion 1211 and the second protrusion 1311 may be fitted into or may pass through the first through-hole 161a and the second through-hole 161b, respectively.

In some embodiments, the electrolyte injection hole 162 for injecting the electrolyte may be defined in the cap plate 161. The electrolyte may be injected into the case 150 through the electrolyte injection hole 162, and thereafter, the electrolyte injection hole 162 may be sealed by a stopper.

In some embodiments, the safety vent 163 may be disposed at approximately a center of the cap plate 161 and may have a relatively thin thickness compared to other areas of the cap plate 161. The safety vent 163 may prevent the secondary battery 100, according to an embodiment of the present disclosure, from rupturing and exploding if pressure inside the case 150 is higher than a reference (or set) rupture pressure.

The first terminal plate 1641 and the second terminal plate 1642 may be electrically connected to the first electrode plate and the second electrode plate of the electrode assembly 110 by using (e.g., through) the first current collector plate 120 and the second current collector plate 130, respectively. In some embodiments, the first terminal plate 1641 and the second terminal plate 1642 may be connected to the first protrusion 1211 and the second protrusion 1311, which protrude to pass through the first through-hole 161a and the second through-hole 161b in the cap plate 161, respectively. In some embodiments, the first terminal plate 1641 may be coupled to the first protrusion 1211 disposed on the first terminal connection part 121 and may be electrically connected to the first electrode plate. In some embodiments, the second terminal plate 1642 may be coupled to the second protrusion 1311 disposed on the second terminal connection part 131 and may be electrically connected to the second electrode plate. In some embodiments, as described above, the first terminal plate 1641 and the second terminal plate 1642 may be fixed to top surfaces of the first protrusion 1211 and the second protrusion 1311 by welding, respectively. In some embodiments, the first terminal plate 1641 and the second terminal plate 1642 may be directly coupled without riveting.

The first upper insulating member 1651 and the second upper insulating member 1652 may be disposed between the first and second terminal plates 1641 and 1642 and the cap plate 161, respectively. The first upper insulating member 1651 and the second upper insulating member 1652 may be disposed to surround the outside of the first terminal plate 1641 and the second terminal plate 1642, respectively, and may be made of an insulating material. In some embodiments, the first upper insulating member 1651 and the second upper insulating member 1652 may seal a gap between the first terminal plate 1641 and the cap plate 161 and a gap between the second terminal plate 1642 and the cap plate 161, respectively. Each of the first upper insulating member 1651 and second upper insulating member 1652 may prevent external moisture from penetrating into the secondary battery 100 and/or may prevent the electrolyte contained within the secondary battery 100 from leaking to the outside.

The first coupling plate 1661 and the second coupling plate 1662 may be disposed between the cap plate 161 and the first terminal plate 1641 and between the cap plate 161 and the second terminal plate 1642, respectively. Each of the first coupling plate 1661 and the second coupling plate 1662 may be made of either an electrically conductive material or an insulating material. In some embodiments, the first coupling plate 1661 disposed below the first terminal plate 1641 may be made of a conductive material, and the second coupling plate 1662 disposed below the second terminal plate 1642 may be made of an insulating material. In some embodiments, the first terminal plate 1641 may have the same polarity as the cap plate 161. In some embodiments, when each of the first coupling plate 1661 and the second coupling plate 1662 is made of the insulating material, each of the first terminal plate 1641 and the second terminal plate 1642 may be electrically separated (or electrically isolated) from the cap plate 161.

The first lower insulating member 1671 and the second lower insulating member 1672 may be disposed between the first current collector plate 120 and the cap plate 161 and between the second current collector plate 130 and the cap plate 161, respectively, to electrically insulate the first and second current collector plates 120 and 130 from the cap plate 161.

Referring to FIGS. 3A to 4B, the first terminal connection part 121 of the first current collector plate 120 may be disposed at (or over) the upper portion of the electrode assembly 110 and may be disposed parallel to the cap plate 161. In some embodiments, the first terminal connection part 121 may be disposed between the electrode assembly 110 and the cap plate 161. The first terminal connection part 121 may include the first protrusion 1211 for connection to the first terminal plate 1641. In some embodiments, the first protrusion 1211 may pass through the cap plate 161 and may be connected to the first terminal plate 1641. For example, the first protrusion 1211 may pass through the cap plate 161 to be in contact with a bottom surface of the first terminal plate 1641. In some embodiments, the first terminal plate 1641 may be laser welded, at its bottom surface, to the first protrusion 1211. In some embodiments, the laser welding may be performed along a first welding line 1211a on (or from) the bottom surface of the first protrusion 1211, as illustrated in FIGS. 3A and 4B. This first welding line 1211a may be provided as a long line based on a longitudinal direction of the first protrusion 1211 and may be formed of a plurality of lines.

In some embodiments, the first protrusion 1211 may be disposed at a central area of the first terminal connection part 121 to protrude in a direction of (or toward) the cap plate 161. In some embodiments, the first protrusion 1211 may protrude in an oval shape in a plan view. For example, the first protrusion 1211 may protrude in a horseshoe shape. However, embodiments of the present disclosure are not limited thereto, and the first protrusion 1211 may protrude in a circular shape, a prismatic shape, and the like in various embodiments. A thickness of the first terminal connection part 121 may be greater than that of the first electrode connection part 122, which will be described later.

The first electrode connection part 122 may extend from the first terminal connection part 121 and may be electrically connected to the first electrode plate. In some embodiments, the first electrode connection part 122 may be bent in a direction perpendicular to the first terminal connection part 121 and may extend along one surface of the electrode assembly 110. The first electrode connection part 122 may be electrically connected to the first electrode non-coating portion of the electrode assembly 110 and may have the same first polarity as the first electrode non-coating portion. When the first current collector plate 120 has the first polarity, the first terminal plate 1641 may also have the first polarity.

In some embodiments, the first current collector plate 120 may further include a first connection part 123 that is vertically bent in the direction from the first terminal connection part 121 toward the electrode assembly 110 to continue to the first electrode connection part 122 and is disposed between the first terminal connection part 121 and the first electrode connection part 122. In some embodiments, as described above, the first terminal connection part 121 and the first electrode connection part 122 may have different thicknesses. In some embodiments, in the first connection part 123 connecting the first terminal connection part 121 to the first electrode connection part 122, a thickness at a side of the first terminal connection part 121 and a thickness at a side of the first electrode connection part 122 may be different from each other. As a result, an inclined surface may be disposed on a portion of the first connection part 123, which is connected between the first terminal connection part 121 and the first electrode connection part 122. Although it is described that the first terminal connection part 121 and the first electrode connection part 122 are bent vertically, embodiments of the present disclosure are not limited thereto. In other embodiments, the first connection part 123 may connect the first terminal connection part 121 to the first electrode connection part 122 at an inclined angle (e.g., at a predetermined inclined angle).

The first electrode connection part 122 may be bent so that a portion of the first electrode connection part 122 in the longitudinal direction protrudes to the outside of the electrode assembly 110 and is also bent so that two areas of the first electrode connection part 122 located at both sides of the protruding portion towards the electrode assembly 110 based on the protruding portion. In some embodiments, the first electrode connection part 122 may have a first area 122a extending from the first terminal connection part 121 and a second area 122b extending from the first area 122a to correspond to the insulating tape of the electrode assembly 110. In some embodiments, the first area 122a may be bent towards the electrode assembly 110 with respect to the second area 122b. The first electrode connection part 122 may be configured so that the first area 122a is symmetrical with respect to the second area 122b in the longitudinal direction. In some embodiments, the second area 122b is disposed at an approximate center of the first area 122a, and the first area 122a may be connected to upper and lower portions (or ends) of the second area 122b. In some embodiments, in the first electrode connection part 122, the first terminal connection part 121 and the first area 122a may be connected through the first connection part 123. In some embodiments, the first electrode connection part 122 may be disposed to be symmetrical with respect to the second area 122b from a portion, at which a thickness at a side of the first electrode connection part 122 is thin, to the first area 122a.

In some embodiments, the first electrode connection part 122 may be provided with a first sub tab 1221 and may be electrically connected to the first electrode plate. The first sub tab 1221 may be a portion that is in direct contact with the first electrode non-coating portion and may be disposed on the first area 122a of the first electrode connection part 122. In some embodiments, the first sub tab 1221 may be disposed to be symmetrical with respect to the second area 122b of the first electrode connection part 122 in the longitudinal direction.

The first electrode connection part 122 and the first sub tab 1221 may be laser welded on (or from) an outer surface of the first electrode connection part 122. In the first electrode connection part 122, the welding area 122c that is laser welded may be divided in (or separated or spaced in) the longitudinal direction. The welding area 122c, to be laser welded, may be at both sides of the protruding portion of the first electrode connection part 122. In some embodiments, when the electrode assembly 110 is provided in the stacked form, the laser welding progress (or movement) direction may be perpendicular to the arrangement direction of the first electrode plate.

In some embodiments, a plurality of welding holes may be defined in each welding area 122c of the first area 122a of the first electrode connection part 122. The welding hole may be provided in plurality and may be arranged along the longitudinal direction of the first electrode connection part 122. Each of the welding holes may extend in a horizontal direction that is perpendicular to the longitudinal direction. In some embodiments, the welding holes defined in the welding area 122c of the first area 122a may extend in a direction approximately perpendicular to the first electrode non-coating portion of the electrode assembly 110.

In some embodiments, a portion of the adjacent surface of the first sub tab 1221 disposed inside the first electrode connection part 122 may be exposed through the welding hole of the first electrode connection part 122. As a result, when a welding beam is irradiated from the outside, the welding beam may pass through the welding hole to reach the adjacent surface (e.g., the exposed surface) of the first sub tab 1221. Because this first sub tab 1221 is in contact with the first electrode non-coating portion of the electrode assembly 110, the first electrode connection part 122 and the first electrode non-coating portion may be connected to each other.

The second current collector plate 130 may be made of a conductive material, such as nickel, and may be in contact with the second electrode non-coating portion, which protrudes to (or from) the other end of the electrode assembly 110 to be electrically connected to the second electrode plate. The second current collector plate 130 may have a second terminal connection part 131 provided with the second protrusion 1311, a second electrode connection part 132, and a second connection part 133. In some embodiments, the second current collector plate 130 may be laser welded to the second terminal plate 1642 along the second welding line 1311a on a rear surface of the second protrusion 1311. In some embodiments, the second electrode connection part 132 may be provided with a second sub tab 1321. The second electrode connection part 132 may have a first area 132a and a second area 132b. In some embodiments, the second area 132b is disposed at an approximate center of the first area 132a, and the first area 132a may be connected to upper and lower portions of the second area 132b. The second electrode connection part 132 and the second sub tab 1321 may be welded at a second welding area 132c of the first area 132a of the second electrode connection part 132. In some embodiments, a second upper insulating member 1652 may be interposed between the second terminal connection part 131 and the second terminal plate 1642, and a second lower insulating member 1672 may be interposed between the second terminal connection part 131 and the cap plate 161. Because a shape of the second current collector plate 130 is the same as that of the first current collector plate 120, a duplicate description thereof will be omitted. However, in some embodiments, a thickness of the first current collector plate 120 may be greater than or the same as the thickness of the second current collector plate 130.

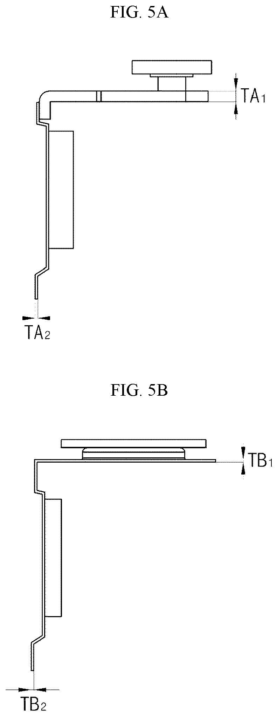

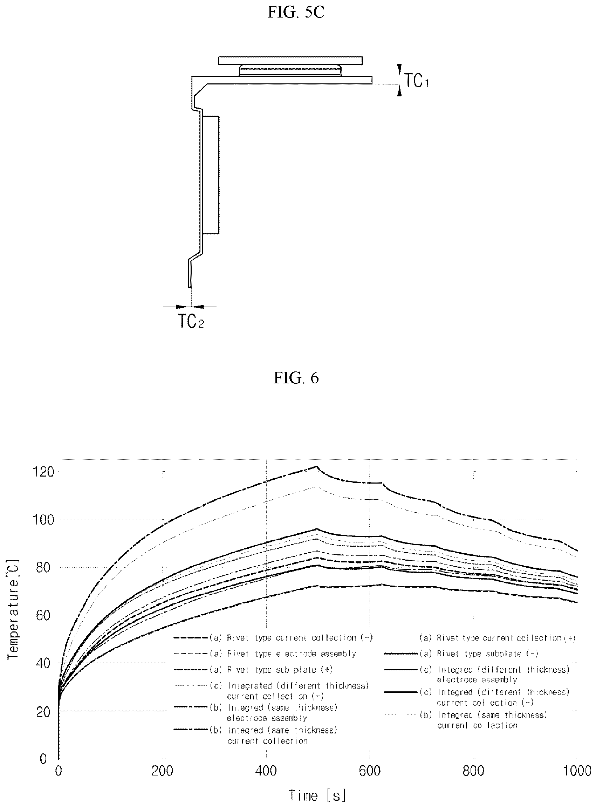

FIGS. 5A to 5C are a front view of a structure of a current collector plate according to various embodiments, and FIG. 6 is a graph of a temperature change for each position in the various embodiments of the current collector plate shown in FIGS. 5A to 5C.

FIG. 5A shows a comparative example of a terminal plate and a current collector plate thar are coupled in a rivet manner, FIG. 5B shows an embodiment in which a terminal plate and an integrated current collector plate are directly coupled (e.g., a terminal connection part and an electrode connection part have the same thickness), and FIG. 5C shows an embodiment in which a terminal plate and an integrated current collector plate are directly coupled (e.g., a terminal connection part and an electrode connection part have different thicknesses).

FIG. 5A shows a rivet structure according to the related art, in which the current collector plate and the subplate are welded together and the terminal plate and the current collector plate are coupled by a rivet. In some embodiments, a thickness TA₁ of the current collector plate and a thickness TA₂ of a subplate may be different from each other. When coupled in the rivet manner, the terminal plate and the current collector plate may be fixed by the rivet, and then, upper and lower portions of the rivet may be welded. A terminal connection portion and an electrode connection portion of the current collector plate may be provided as separate components to weld the two portions through welding, and thus, an additional welding point may occur. As a result, the number of welding points and components increase, which may be inefficient in terms of production time and cost.

FIG. 5B shows an integrated current collector according to an embodiment of the present disclosure, and FIG. 5C shows an integrated current collector according to another embodiment of the present disclosure. In the embodiment shown in FIG. 5B, the thickness TB₁ of the terminal connection part and the thickness TB₂ of the electrode connection part may be the same, and in the embodiment shown in FIG. 5C, the thickness TC₁ of the terminal connection part and the thickness TC₂ of the electrode connection part may be different from each other. In the embodiments shown in FIGS. 5B and 5C, the product production time and cost may be reduced by reducing the number of welding points while fixing the terminal plate and integrated current collector without using a rivet. By reducing or minimizing the number of welding points, a defect rate is reduced. If the welding is not performed properly, heat and electrical resistance increase to greatly and affect the lifespan of the battery cell, so the number of welding points is reduced. In some embodiments, because the welding is expensive, when the number of welding points is reduced, costs may be reduced. Therefore, in the embodiments shown in FIGS. 5B and 5C, unnecessary processes, such as welding of separate components, may be omitted by constructing the terminal connection part and the electrode connection part as an integrated component, and also, because of considering the shape of the sheet metal and the shape of the mold, the electrode plate may be provided according to convenience and manufacturing environment. In some embodiments, for example, the embodiments shown in FIGS. 5B and 5C, an area of the terminal plate may be larger compared to the area of the terminal plate of the comparative example shown in FIG. 5A, and a heat distribution effect may be improved. In some embodiments, a temperature of a bus bar coupled to the terminal plate may be reduced, and the bus bar may be easily attached because an area thereof is large.

In some embodiments, for example, the embodiment shown in FIG. 5C, because the protrusion of the integrated current collector and the terminal plate are fixed without using a rivet, a thickness of the terminal-side current collector may be reduced compared to that in the comparative example shown in FIG. 5A in terms of rigidity, which may be beneficial in terms of reduction of the material cost.

**Table 1**

| Profile | Current [A] | Time [Sec] | (a) rivet type structure | | | | | (b) Integrated structure (same thickness) | | | (b) Integrated structure (Different thickness) | | |
|---|---|---|---|---|---|---|---|---|---|---|---|---|---|
| | | | Maximum temperature (°C) | | | | | Maximum temperature (°C) | | | Maximum temperature (°C) | | |
| | | | CC(+) | CC(-) | Subplate (+) | Subplate (-) | Stack | Electrode connection part (+) | Electrode connection part (-) | Stack | Electrode connection part (+) | Electrode connection part (-) | Stack |
| Step 1 | 390 | 498 | 93.67 | 83.77 | 91.97 | 80.87 | 71.88 | 122.06 | 113.61 | 80.75 | 95.74 | 86.65 | 72.20 |
| Step 2 | 350 | 623 | 90.54 | 82.47 | 88.97 | 79.91 | 72.32 | 114.9 | 108.05 | 80.62 | 92.89 | 85.07 | 72.72 |
| Step 3 | 318 | 726 | 86.52 | 79.9 | 85.12 | 77.67 | 71.23 | 107.36 | 101.78 | 78.88 | 88.78 | 82.15 | 71.63 |
| Step 4 | 290 | 839 | 82.06 | 80.87 | 76.68 | 74.8 | 69.38 | 99.68 | 95.20 | 76.37 | 84.05 | 78.58 | 69.74 |
| Step 5 | 258 | 966 | 76.51 | 72.37 | 75.52 | 70.84 | 66.48 | 90.88 | 87.48 | 72.7 | 78.19 | 73.89 | 66.78 |
| Step 6 | 223 | 1113 | 70.06 | 67.1 | 69.28 | 65.91 | 62.59 | 81.32 | 78.91 | 67.97 | 71.40 | 68.24 | 62.82 |
| Step 7 | 198 | 1234 | 65.44 | 63.16 | 64.77 | 59.18 | 59.47 | 74.80 | 72.98 | 64.28 | 66.56 | 64.07 | 59.66 |

Table 1, above, shows a maximum temperature at positive and negative electrode plates (e.g., at terminal connection part and electrode connection part) in the electrode assembly at a specific current value over time, and FIG. 6 is a graph of a change in maximum temperature. Referring to Table 1 and FIG. 6, it is seen that the maximum temperature of the embodiment shown in FIG. 5C is similar to that for the comparative example shown in FIG. 5A, and that the temperature is lower at all positions than that of the embodiment shown in FIG. 5B. That is, it may be seen that, in the current collector plate structure shown in, for example, FIG. 5C, of the secondary battery according to an embodiment of the present disclosure, the thickness of the terminal connection part is secured to ensure rigidity and heat generation performance.

According to embodiments of the present disclosure, the protrusion area for the welding may be disposed on the current collector plate that is integrated with the subplate, and the current collector plate and the terminal plate may be welded without a rivet to minimize the welding points, thereby reducing the product production time and costs and improving the productivity.

According to embodiments of the present disclosure, because the area of the terminal plate is increased compared to the existing examples, the busbar may be easily attached, and the heat distribution effect may be improved to reduce the temperature of the busbar.

## Claims

1. A secondary battery (100) comprising:
an electrode assembly (110) comprising a first electrode plate, a second electrode plate, and a separator;
a case (150) accommodating the electrode assembly (110) and having an opening;
a cap plate (161) coupled to and sealing the opening in the case (150);
a first terminal plate (1641) on the cap plate (161) and electrically connected to the first electrode plate; and
a first current collector plate (120) between the first terminal plate (1641) and the electrode assembly (110) to electrically connect the first terminal plate (1641) to the first electrode plate,
wherein the first current collector plate (120) has a first protrusion (1211) that passes through the cap plate (161) and is connected to the first terminal plate (1641).

2. The secondary battery (100) as claimed in claim 1, wherein the first current collector plate (120) comprises:
a first terminal connection part (121) connected to the first terminal plate (1641); and
a first electrode connection part (122) extending from the first terminal connection part (121) and coupled to the first electrode plate.

3. The secondary battery (100) as claimed in claim 2, wherein the first terminal connection part (121) and the first electrode connection part (122) are integral with each other.

4. The secondary battery (100) as claimed in claim 2, wherein the first protrusion (1211) is at central area of the first terminal connection part (121), and protrudes toward the cap plate (161).

5. The secondary battery (100) as claimed in claim 2, wherein the first current collector plate (120) further comprises a first connection part (123) that is vertically bent from the first terminal connection part (121) toward the electrode assembly (110) and extends to the first electrode connection part (122) and is between the first terminal connection part (121) between the first electrode connection part (122).

6. The secondary battery (100) as claimed in claim 5, wherein the first connection part (123) has an inclined surface at portion extending from the first terminal connection part (121) to the first electrode connection part (122).

7. The secondary battery (100) as claimed in claim 5, wherein, in the first connection part (123), a thickness at a side of the first terminal connection part (121) and a thickness at a side of the first electrode connection part (122) is different from each other.

8. The secondary battery (100) as claimed in claim 2, wherein a thickness of the first terminal connection part (121) is greater than that of the first electrode connection part (122).

9. The secondary battery (100) as claimed in claim 2, wherein the first protrusion (1211) is in contact with bottom surface of the first terminal plate (1641).

10. The secondary battery (100) as claimed in claim 2, wherein the first protrusion (1211) is laser welded to a bottom surface of the first terminal plate (1641).

11. The secondary battery (100) as claimed in claim 2, wherein the first protrusion (1211) protrudes in an oval shape in a plan view.

12. The secondary battery (100) as claimed in claim 2, wherein the cap plate (161) has a first through-hole (161a) through which the first protrusion (1211) passes, and
wherein the first through-hole (161a) corresponds to shape of the first protrusion (1211).

13. The secondary battery (100) as claimed in claim 12, wherein the first through-hole (161a) has a size greater than or equal to that of the first protrusion (1211).

14. The secondary battery (100) as claimed in claim 2, wherein a portion of the first electrode connection part (122) in a longitudinal direction is bent to protrude to the outside of the electrode assembly (110), and
wherein two areas of the first electrode connection part (122) locate at both sides of the protruding portion bent towards the electrode assembly (110) about the protruding portion.

15. The secondary battery (100) as claimed in claim 14, further comprising:
a first sub tab (1221) coupled to the first electrode connection part (122) and connected to the first electrode plate.
